Europäisches Patentamt

**European Patent Office**

**Office européen des brevets**

(11) Publication number: **0 091 705**

**A1**

(12) **EUROPEAN PATENT APPLICATION**

(21) Application number: **83200433.7**

(22) Date of filing: **28.03.83**

(51) Int. Cl.³: **B 29 F 3/01**

(30) Priority: **01.04.82 ES 511029**

(43) Date of publication of application:
**19.10.83 Bulletin 83/42**

(84) Designated Contracting States:
**AT BE CH DE FR GB IT LI NL SE**

(71) Applicant: **GRUPTECNIC S.A.**
**Ctra. de Prats s/n.Po.Ind."La Lanera"**
**Sabadell (Barcelona)(ES)**

(72) Inventor: **Casanovas Abelanet, Guillermo**
**4 Calle Almendros**
**Barcelona 34(ES)**

(74) Representative: **Reynvaan, Lambertus Johannes,**
**Ir. et al,**
**EXTERPATENT Willem Witsenplein 4**
**NL-2596 BK 's-Gravenhage(NL)**

(54) **Extruding machine for plastic material and the like.**

㊿ An extruding machine for plastic material and the like comprising one or more worm spindles (1). Each spindle is divided in two end portions (2, 3) and an intermediate portion (4). The two end portions of each spindle are designed as worms (5, 6) with opposite directed screws, the worm portions being positioned in a cylindrical housing respectively (8, 9) while the intermediate portion (4) of the spindle is located in a receiving chamber (7) positioned in between said cylinders.

The material to be extruded is supplied by respective hoppers (12 and 13) each arranged at the end of the cylinder remote from the chamber (7). So the worms (5 and 6) push the material from two opposite sides into the receiving chamber from where it is passed to the machine die by deflecting inner walls 10 of said chamber.

_Fig. 1._

EP 0 091 705 A1

Extruding machine for plastic material and the like.

The present invention relates to an extruding machine for plastic material and the like by means of which the difficulties occurring in the assembly of end bearings for the spindle shafts are solved, the end bearing being capable to withstand the strain originated in the cylinder during machine operation.

In all the extruding machines operated by means of spindles, considerable pressures are generated in the cylinder due to the strain caused by the spindle when pushirg the material towards the outlet die, first in a solid condition and then as a paste due to the heating at which it is subjected.

These pressures and strains cause an opposite stress against the spindle advance, and its neutralization requires the assembly of friction thrust bearings at the ends of the spindles remote from the material outlet, these bearings consequently must have a high load capacity to withstand those pressures. Accordingly, in the double spindle extruding machines, it becomes impossible to mount such bearings because there is not enough space available for the assembly or else the assembly is very costly since the diameter required for these bearings overexceeds the distance between shafts of the two spindles.

In the single spindle extruding machines, the strains to be withstood are equal, but the assembly of the bearings is much easier since there are no space limitations as in the double spindle extruding machines.

To solve all the herefore mentioned inconveniences, an object of the invention is to provide an extruding machine by means of which the assembly of higher diameter bearings is no longer required since neutralization of strains and pressures generated as a reaction of/action of the spindles is achieved by other means.

Accordingly, the present invention provides extruding machines for plastic material or other material capable of being extruded and similar in that matter, wherein each spindle is divided in two end portions and an intermediate portion, the two end portions being designed as worms with opposite directed screws, which are located in cylindrical housings respectively, while the intermediate portion is located in a receiving chamber positioned in between said cylinders, the ends of the cylinders, which are remote from one another, each being provided with a feedinghopper for feeding the material to be extruded into the respective cylinders and the material is pushed by the worms into the chamber from two opposite sides, said chamber being provided with an outlet leading to the machine die.

The spindle or spindles of the machine each having two worm portions can be constructed integrally or either by mutually joined components. The improvements also involve the arrangement of respective feeding hoppers for the material to be extruded, respectively positioned at the ends of the spindles, so that plastic material is directed towards the center portion where a receiving chamber for the material coming from both worms is arranged. From said chamber the material is guided to the machine die. It is apparent that two or more spindles parallel or convergingly fitted can be present.

In a preferred embodiment the inner walls of the intermediate chamber, wherein material coming from the two worm portions is fed, are directed towards the outlet, as if they were deflectors in order to achieve an easier mass displacement.

In order that the invention may be readily understood an embodiment thereof will now be described, by way of example, with reference to the accompanying drawings, in which:
Fig. 1 shows diagrammatically a perspective view of the extruder machine according to the invention having two parallel or converging spindles;
Fig. 2 is a longitudinal sectional view of the center area, in which the reception chamber is positioned for the mass coming from both ends of the spindles.

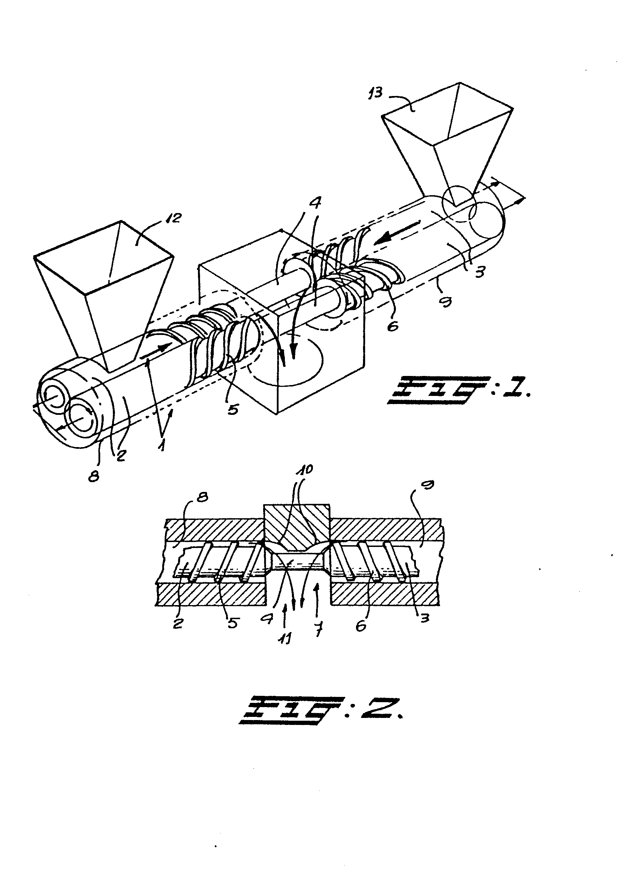

Referring to the figs. 1 and 2 an extruding machine for plastic or the like materials is shown, having a pair of parallel or converging spindles 1, each spindle being divided in two opposite portions 2 and 3 extending from the respective ends of the spindle, and an intermediate portion 4.

These end portions 2 and 3 are each designed as worms 5 and 6 with opposite directed screw thread and leading to a chamber 7 in which the intermediate portion 4 of the spindle is located. Into said chamber 7 debouch cylinders 8 and 9 in which the spindle portions 2 and 3 respectively extend longitudinally.

Advantageously, chamber 7 has inside walls which are designed like deflectors 10 directed towards an outlet 11, leading to the machine dies (not shown).

At the end of the cylinders 8 and 9 remote from the chamber 7 respective feeding hoppers 12 and 13 are arranged forming an inlet for the cylinders in order to feed the material to be extruded into the cylinder at the beginning of the respective worm portions 2 and 3.

The operation of the extruding machine according to the invention will now be described. The material loaded into the hoppers 12 and 13 is fed into the cylinders 8 and 9 at the end portions 2 and 3 of the spindles. The spindles are driven in opposite direction and press the material by means of the worms 5 and 6 towards the chamber 7, from where the material is discharged as a paste by the thermal action of known heaters located at the level of chamber 7 through the outlet 11 towards the extruding die.

The forced advance of the material through the cylinders 8 and 9 causes, as in all machines of this kind, a remarkable pressure and load. So the chamber and the very spindle shafts are subjected to considerable loads, but because of the fact that each shaft is subjected to two oppositely directed loads which are counteracting as a consequence of the opposite position of worms 5 and 6, there is no remaining external load working on the spindle.

This balance allows that, even if two spindles are arranged, there are no difficulties in the arrangement of the supporting bearings, as it is not longer necessary to use special bearings with a greater diameter, because the in one direction directed load has disappeared for which in the heretofore known extruding machines, special bearings had to be used.

Another special advantage achieved with the construction according to the invention is that, if material of different colours is fed in each hopper 12 and 13, at the outlet 11 of the chamber 7 the plastic melted mixture of the two colours in equal parts is obtained.

- 1 -

Claims:

1.      Extruding machine for plastic material and the like comprising one or more worm spindles (1), characterized in that each spindle (1) is divided into two end portions (2, 3) and an intermediate portion (4), the two end portions being designed as worms (5, 6) with opposite directed screws, which are located in cylindrical housings respectively (8, 9) while the intermediate portion (4) is located in a receiving chamber (7) positioned in between said cylinders, the ends of the cylinders, which are remote from one another each being provided with a feeding hopper (12, 13) for feeding the material to be extruded into the respective cylinders and the material is pushed by the worms into the chamber from two opposite sides, said chamber being provided with an outlet leading to the machine die.

2.      Extruding machine for plastic material and the like, according to claim 1, characterized in that the receiving chamber into which the cylinders debouch, has inside walls which are directed towards the outlet, as if they were deflectors, in order to achieve an easier discharge of the material.

0091705

1|1

FIG:1.

FIG:2.

## European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-1 549 476 (GARRET)<br>* Figures 1,2 * | 1 | B 29 F 3/01 |
| X | FR-A-2 288 608 (BECK)<br>* Figure 1 * | 1 | |
| X | US-A-2 535 865 (PONCELET)<br>* Figure 1 * | 1 | |
| X | DE-A-2 202 303 (DREYHAUPT)<br>* Figure 2 * | 1 | |
| X | US-A-4 212 543 (BERSANO)<br>* Figures 1,2,2A * | 1 | |
| X | DE-C- 803 325 (K. MORITZ)<br>* Figure 2 * | 1 | TECHNICAL FIELDS SEARCHED (Int. Cl. ³)<br><br>B 29 F 3/00 |

The present search report has been drawn up for all claims

| Place of search | Date of completion of the search | Examiner |
|---|---|---|
| THE HAGUE | 11-07-1983 | KUSARDY R. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82